# EUROPEAN PATENT SPECIFICATION

(11) **EP 4 615 286 B1**
(45) Date of publication and mention of the grant of the patent: **08.04.2026**
(21) Application number: 23786589.4
(22) Date of filing: 11.10.2023
(51) Int. Cl.: A47J 31/44

(54) **BEVERAGE PREPARATION MACHINE**
GETRÄNKEZUBEREITUNGSMASCHINE
MACHINE DE PRÉPARATION DE BOISSONS

(30) Priority: 07.11.2022 EP 22205828
(43) Date of publication of application: 17.09.2025
(73) Proprietor: Société des Produits Nestlé S.A., 1800 Vevey (CH)
(72) Inventor: KOLLEP, Alexandre, 1095 Lutry (CH); VUAGNIAUX, Didier, 1188 Gimel (CH)
(74) Representative: Pasquino, Fabio
(86) International application number: PCT/EP2023/078248
(87) International publication number: WO 2024/099674

(56) References cited:
- EP-A1- 3 838 080
- WO-A1-2016/116359
- US-A1- 2013 099 597
- US-A1- 2017 196 397

## Description

### Field of the invention

The present invention relates to a machine preparing beverage from single dose containers.

### Background of the invention

Systems for the preparation of a beverage comprise a beverage preparation machine and a capsule. The capsule comprises a single-serving of a beverage forming precursor material, e.g. ground coffee or tea. The beverage preparation machine is arranged to execute a beverage preparation process on the capsule, typically by the exposure of pressurized, heated water to said precursor material. Processing of the capsule in this manner causes the at least partial extraction of the precursor material from the capsule as the beverage.

This configuration of beverage preparation machine has increased popularity due to 1) enhanced user convenience compared to a conventional beverage preparation machines (e.g. compared to a manually operated stove-top espresso maker) and 2) an enhanced beverage preparation process, wherein preparation information encoded by a code on the capsule is read by the machine to define a recipe, and the recipe is used by the machine to optimise the preparation process in a manner specific to the capsule. In particular, the encoded preparation information may comprise operating parameters selected in the beverage preparation process, including : fluid temperature, fluid pressure, preparation duration and fluid volume.

Different types of codes exist with different corresponding types of reading processes. For some codes, in particular codes that are read optically, the machine may implement a process to read the code that needs a contact of the code with the code reader of the machine.

US2017196397A1 discloses a capsule processing unit of a beverage preparation machine, which comprises an extraction unit to extract an ingredient of a beverage from a capsule during preparation of the beverage. The capsule processing unit comprising: a code reading system comprising a code reader and a code reading mechanism, the code reading mechanism configured to effect reading of a code of a capsule by the code reader by imparting relative movement between a code reader and capsule; a capsule transfer mechanism configured to effect transfer of a capsule to the extraction unit; an actuator unit to actuate the code reading system to read the code and to actuate the capsule transfer mechanism to effect transfer of the capsule.

A similar code reading mechanism is also discloses in EP3838080A1.

Capsules can be made of different materials. Preferably, these materials are airtight in order to protect the beverage precursor from oxygen before the capsule is used. These materials can present different mechanical properties : some capsules can be made of rigid material whereas other capsules can be made of soft and deformable material, such as a material comprising a paper material. In case of an airtight capsule made of a soft and deformable material, it can be observed that the shape of the walls of the capsule vary under the effect of a certain difference of altitudes between the place where the capsule is manufactured and the place where the capsule is used for preparing a beverage. In particular, the walls of the capsule can inflate when the altitude is higher at use than at manufacturing. If the capsule comprises an optical code on an inflated wall, the process of reading may be impacted by this deformation of the wall and the reading may not be correct.

An object of the present invention is to solve this problem.

### Summary of the invention

In a first aspect of the invention, there is provided a system comprising a beverage preparation machine and a pod containing a beverage ingredient.

The pod comprises a first and a second enclosing walls, which define a chamber for enclosing the beverage ingredient, and a machine-readable code storing preparation information is arranged on the surface of at least one of the enclosing walls
The beverage preparation machine comprises :
- an extraction device for extracting a beverage from the pod, and
- a code reading system to read the code of the pod, and
- electrical circuitry to control the extraction device based on the preparation information read from the code.

The code reading system includes a code reader and a positioning mechanism to move the pod and the code reader relative to each other :
- from a holding position, in which the pod is separated from a reading head of the code reader,
- to a reading position, in which the code of the container is in contact with the reading head.

In addition, the beverage preparation machine comprises a pre-piercing arrangement configured to pierce the pod before the code of the pod is read in the reading position.

Consequently, if the pod is inflated and the code on the inflated surface more difficult to read in the reading operation, this pre-piercing arrangement enables a piercing to deflate the pod and makes the contact with the reading head optimal. The pre-piercing operation does not need to produce an important hole since the requirement is to just enable gas to pass through and to open the pod to the atmosphere.

Preferably, the pre-piercing arrangement is configured to pierce the wall of the pod that is opposed to the wall to be contacted by the reading head.

As a result, there is no risk that the operation of pre-piercing damages the code or dirties the code before the code is read by the code reading system.

Preferably, the beverage preparation machine comprises a pre-piercing arrangement configured to pierce the pod when the positioning mechanism moves the pod and/or the code reader relative to each other from the holding position to the reading position.

Consequently, the pod becomes pierced just before the code is read : the code can be read optimally by the code reader and the beverage ingredient inside the pod is not damaged by this piercing since beverage preparation happens usually just after reading of the code.

Depending on the type of positioning mechanism, the pre-piercing arrangement can be moved to the pod, that is immobile, or the pod can be moved to the pre-piercing arrangement that is fixed, or both the pod and the pre-piercing arrangement can be moved one to the other.

In one preferred embodiment, the positioning mechanism comprises a pushing device configured to push the pod from the holding position to the reading position, and this pushing device bears the pre-piercing arrangement.

Accordingly, in the operation of positioning the pod in the reading position, the pod is pre-pierced simultaneously.

The extraction device of the system is typically comprised in a beverage preparation machine configured for receiving pods. Preferably it is a coffee machine, though the machine can be designed to prepare tea, chocolate or soup for instance, depending on the ingredient enclosed in the pod. In particular, the machine is arranged for preparing within the extraction chamber a beverage by passing water or another liquid through a pod containing an ingredient of the beverage to be prepared, preferably roasted ground coffee, or eventually tea leaves or instant coffee or instant tea or chocolate or cacao or milk powder or dehydrated soup. In the preferred embodiment, the beverage ingredient is roasted and ground coffee.

The device is configured for extracting a beverage ingredient contained in a pod by supplying an extraction liquid such as water into the pod.

Typically, the pod can be inserted into the extraction device from above under the effect of gravity. Ejection or removal of the pod upon reopening of the enclosing parts may also be driven by gravity.

Usually, the beverage preparation machine of the system comprises :
- an extraction device for extracting a beverage from the pod, and
- this extraction device comprises upstream and downstream pod enclosing parts, wherein at least one of said pod enclosing parts is movable to the other between an open position for inserting and removing the pod and a closed position for forming an extraction chamber enclosing the pod during extraction, and
- the code reader is positioned above the upstream and downstream pod enclosing parts.

Generally, the upstream pod enclosing part comprises piercing elements for piercing a wall of the pod and liquid outlet openings to introduce liquid through the pierced wall, and the downstream pod enclosing part comprises a downstream piercing arrangement for opening another wall of the pod.

The upstream part or injecting part comprises an upstream piercing arrangement in the form of one or more piercers for piercing a wall of the pod and at least one liquid injector for supplying liquid through the pierced first wall of the pod.

This upstream piercing arrangement can comprise piercers in the form of blades. These blades ca be designed and positioned to pierce the bottom wall of the pod body when the upstream and downstream pod enclosing parts are brought to the closed position. The liquid injector, such as a shower at the upstream part of the cage, can introduce the extracting liquid through the pre-pierced openings.

In an alternative, this upstream piercing arrangement can comprise at least one hollow needle configured to pierce the wall of the bottom of the pod body and the hollow needle(s) can comprise an internal axial channel for guiding the extraction liquid in the chamber of the pod.

The downstream part or dispensing part defines a downstream piercing arrangement for opening the lid wall of the pod when the extracting liquid is introduced inside the pod. Usually, this downstream plane piercing arrangement is designed for opening a wall of the pod by relative engagement with said wall under the effect of the rise in pressure of the injected liquid in the chamber of the pod and inflation of the lid against the piercing arrangement. In the preferred embodiment, this downstream plane piercing arrangement comprises a plate, that is preferably rigid, and that comprises opening elements like a plurality of relief and recessed elements such as spikes, that can present the shape of cones or pyramids on its surface turned to the second wall.

In addition, the plate comprises traversing holes to evacuate the beverage dispensed from the opened lid to a tube or nozzle collecting and dispensing beverage in a drinking cup.

Usually, the shapes of the upstream and enclosing parts of the extraction device are defined according to the shape of the pod configured to be extracted therefrom.

Generally, the extracting device can comprise an insertion section for inserting the pod in the device. Generally, this section is positioned above the upstream and downstream pod enclosing parts so that the pod is inserted by gravity between these two parts. Depending on the shape of the pod, this insertion section can be designed so that the user is urged to position the pod with its lid facing the downstream piercing arrangement.

Preferably, the code reader is positioned above the upstream and downstream pod enclosing parts so that the operation of reading is implemented before the pod is inserted between the upstream and downstream enclosing parts. If the operation is reading is not possible, the pod is prevented from being inserted inside the extraction device.

Usually, the code reader is positioned at the insertion section.

The extraction device can comprise a pod holder configured to hold the pod between the upstream and downstream pod enclosing parts when these parts are in the opened position. Such a pod holder can be retracted and can make the pod free in order to be enclosed by the two enclosing parts when these parts are in the closed position. For example, WO 2005/004683 or WO 2007/134960 illustrate such types of pod holders.

Preferably, the beverage preparation machine comprises a means to block vertically temporary the pod in the holding position above the upstream and downstream pod enclosing parts, and
the blocking means is actuated by a movement of the upstream enclosing part and/or the downstream pod enclosing part.

In particular, this pod blocking means can be a pod support attached to the upstream or the downstream pod enclosing part, and can be designed and positioned relatively to the upstream and downstream enclosing parts :
- to receive and hold the pod above these two pod enclosing parts when these parts are positioned in a pod holding intermediate position, and
- to release the pod when these pod enclosing parts are positioned to the opened position.

According to the preferred embodiment, only one of the enclosing parts is movable and the pod blocking means can comprise at least two protrusions extending longitudinally from the front side of said movable enclosing part. Depending on the position of said enclosing part, these protrusions :
- can provide a support for the pod in the holding position in front of the code reader, or
- can release the pod from this holding position to a position between the two pod enclosing parts when the movable enclosing part is moved to the fully opened position. The pod can fall for example inside a pod holder between the two pod enclosing parts.

According to one preferred embodiment,
- the positioning mechanism comprises a pushing device, and
- the pushing device bears the pre-piercing arrangement, and
- the pushing device is attached to one of the movable pod enclosing parts.

By attaching the pushing device and the pre-piercing arrangement to one of the movable pod enclosing parts, the movement of the pushing device and the pre-piercing arrangement can be controlled by the position of one of the pod enclosing part, which simplifies actuation. In particular, one motor only can be used to actuate the positioning mechanism of the code reading system, the pre-piercing arrangement and the pod enclosing part.

The movable pod enclosing part bearing the pushing device can be successively positioned :
- in its pod holding position wherein the pod is inserted in the beverage preparation machine and positioned in the holding position of the code reading system,
- in the reading position of the code reading system, wherein the pod is pushed by the pushing device in contact with the reading head and is simultaneously pre-pierced by the pre-piercing arrangement, and
- in its open position away from the other pod enclosing part, where the pod is inserted in the extraction device and catch in a pod holder if present.

In the preferred embodiment,
- the downstream pod enclosing part is fixed, and
- the upstream pod enclosing part is translatable along a longitudinal axis (XX') between a fully opened position and a closed position, and the upstream enclosing part bears the blocking means, the pushing device and the pre-piercing arrangement.

Generally, the upstream pod enclosing part is driven by a motor, preferably by way of a gear mechanism, and
- the machine comprises a rotary encoder cooperating with the shaft of the motor, and
- the control system of the machine controls the motor dependent on the signals provided by the rotary encoder.

Accordingly, the different positions of the upstream enclosing parts can be identified in relation with the encoder counting.

Preferably, the pod of the system is airtight and at least a part of the enclosing walls of the pod is made of a deformable material, said material being deformable under a difference of external atmospheric pressure, and the machine-readable code storing preparation information is arranged on the surface of said part of the enclosing walls of the pod made of the deformable material.

In particular, this deformable material can be a multilayer paper material, said multilayer paper material comprising at least one layer of paper assembled with at least one layer of plastic, preferably a compostable plastic layer.

Preferably, he layer of paper of this multilayer paper material can be a formable sheet of paper.

Alternatively, and at least for the pod body, this layer of paper can be formed :
- by wet pulp moulding. Therein, the process of forming the body may comprise the step of placing pulp slurry in a mould, for example by filling the mould with the slurry or by drowning the mould in the slurry. The pulp slurry may be pressed in the mould, and the so formed body may be dried. The pulp can be a material, such as cellulose pulp, bamboo pulp, wood pulp, bagasse, non-wood pulp, cellulose based pulp or other alternative sources of pulp in any form. or
- by dry pulp moulding. Therein, the process of forming the body may comprise the step of providing a blank of preferably dried cellulose fibres. Then, the blank may be formed with a tool preferably under the application of heat and/ or water into the shape of the body.

Preferably, the layer of paper of the multilayer paper presents a grammage of at least 20 g/m², preferably at most 150 g/m². The layer of paper forming the body can present a higher grammage than the layer of the paper forming the lid because it needs to be deformed during manufacturing.

The layer of paper of this multilayer paper material can also be identified as the primary layer in the present application.

Whatever the type of the layer of paper, this layer is assembled with at least a layer of plastic. This layer of plastic can also be identified as the secondary layer in the present application.

The layer of plastic can be selected in the list of :
- a polylactic acid (PLA) layer,
- a polybutylene succinate (PBS) layer,
- a polybutylene adipate terephthalate (PBAT) layer,
- a polyhydroxy alkanoate (PHA) layer,
- a polycaprolactone (PCL) layer,
- a layer of a polymer blend formed of any combination of above polymers.

The paper layer can be assembled with several of these different layers of plastic.

This plastic layer reinforces the protection of the paper layer against liquid, gas and moisture for the beverage ingredient.

In addition to these paper and plastic layers, preferably, the multilayer paper material can comprise an additional layer of material providing a barrier to oxygen. This layer can also be identified as the tertiary layer in the present application.

This layer can be selected in the list of :
- a polyvinyl-alcohol copolymer (PVOH) layer, in particular a butenediol-vinyl-alcohol-copolymer (BVOH) layer,
- a polyglycolic acid (PGA) layer,
- a metallization coating,
- a SiOₓ based coating,
- an AlOₓ based coating,
- a combination thereof.

In one particular embodiment where this additional or tertiary layer is a plastic polymer, the secondary and tertiary layer can be assembled together as a multilayer plastic film. In this embodiment, this multilayer layer of plastic can comprise the internal tertiary layer positioned between two external secondary layers.

Preferably, the internal tertiary layer is a polyvinyl alcohol copolymer (PVOH) film, in particular a butenediol vinyl alcohol (BVOH) film.

Preferably, the external secondary polymer layers can be chosen among films of polylactic acid (PLA), polybutylene succinate (PBS), polyhydroxyalkanoates (PHA), polybutylene adipate terephthalate (PBAT) and starch. The secondary film can also be composed of a polymer blend formed of any combination of these listed polymers,

Preferably, these three layers are attached by means of two intermediate adhesive layers, preferably an anhydride modified polymer resin. Generally, this multilayer layer of plastic is produced by co-extrusion.

Usually, the multilayer paper material can further comprise an ink printing on one of its surfaces. The ink printing is preferably food safe. This ink prinking can provide the code on the surface of the pod.

The assembly of the different layers of the material can be obtained by any type of process depending on the nature of the layers such as :
- co-lamination or co-extrusion of the layers,
- coating or deposit of one compound on another layer to form a layer on the other,
- co-extrusion coating.

In addition, the different layers can be bound one to the other by an intermediate adhesive layer.

Preferably, the pod contains a compacted beverage ingredient, preferably compacted roast and ground coffee.

When the pod is pressed against the reading head of the code reader, compacted coffee provides a counter surface that improves the pre-piercing of the enclosing wall during the reading operation.

For example, coffee can be compacted as described in WO2020/089403 or any other process
According to a second aspect, the preparation machine for preparing a beverage from a pod, wherein said beverage preparation machine comprises :
- an extraction device for extracting a beverage from the pod, and
- a code reading system to read the code of the pod, and
- electrical circuitry to control the extraction device based on the preparation information read from the code,
wherein the code reading system includes a code reader and a positioning mechanism to move the pod and the code reader relative to each other :
. from a holding position, in which the pod is separated from a reading head of the code reader,
. to a reading position, in which the code of the container is in contact with the reading head,
wherein the beverage preparation machine comprises a pre-piercing arrangement configured to pierce the pod before the code of the pod is read in the reading position.

This beverage machine comprises a liquid supply system connected to the upstream enclosing part. This liquid supply system can comprise :
- a liquid supply such as a liquid tank that usually stores liquid at ambient, also identified as cold by opposition to hot, temperature,
- pumping means to drive liquid from the liquid supply to the extraction device,
- heating means to adapt the temperature of the liquid before it is introduced inside the pod if desired.

The liquid is usually water.

In one particular embodiment, the machine can comprise additional cooling means to cool down the temperature of the liquid.

The machine comprises a motor to actuate the movement of at least one of the upstream and downstream container enclosing parts. It is preferably an electrical motor. The motor is usually connected to at least one of the pod enclosing parts by an intermediate actuator, such as a knee lever. Connection usually comprises a gear mechanism between the shaft of the motor and the intermediate actuator.

The machine comprises a control system configured to control the actuation of the motor and accordingly the relative positions of the upstream and downstream pod enclosing parts during a beverage preparation.

Usually, this control system is configured to control the pump and the heater of liquid supply system too.

In the preferred embodiment,
- the downstream pod enclosing part is fixed, and
- the upstream pod enclosing part is translatable along a longitudinal axis (XX') between a fully opened position and a closed position, and
- the control system of the motor is configured to position the upstream pod enclosing part in at other positions between the fully open position and the closed position, in particular:
   - the holding position,
   - the reading position.

The translation of only one of the two enclosing parts provides a simple architecture of the extraction device and reduces manufacturing costs too.

With this architecture, the upstream pod enclosing part can be translated and positioned at different positions comprising :
- the closed position wherein the two enclosing parts form the extraction chamber,
- the fully opened position wherein the upstream pod enclosing part is at the farthest position from the downstream enclosing part,
- intermediate positions between these two precedent positions to enable the position of the pod in the holding position and in the reading position.

In a third aspect, there is provided a method of reading a code of a pod containing a beverage ingredient for preparing a beverage and/or foodstuff, the method comprising :
- moving the pod relative a code reader from a holding position in which the pod is separated from the code reader to a reading position in which the code of the pod is in contact with the code reader, and
- reading the code,
wherein, before the code is read, the pod is pre-pierced.

Preferably, the pod is pre-pierced on the wall of the pod devoid of code.

In a fourth aspect, there is provided the use of a pod comprising a first and a second enclosing walls, said first and second enclosing walls defining a chamber for enclosing the beverage ingredient, and wherein a machine-readable code storing preparation information is arranged on the surface of at least one of the enclosing walls in the system such as described above or in the beverage preparation machine such as described above.

In the present application :
- the term "pod" is used to broadly designate any kind of single-dose container suitable for preparing beverages or other edible products such as capsules, cartridges, portioned or individual packages without limitation to the shape of this container, the material this container is made of or the types of piercing means needed to extract the beverage therefrom.
- the term "longitudinally" refers to the orientation of the two enclosing parts one to the other and their movement along the longitudinal axis XX'. Accordingly, the term "transversally" refers to the orientation that is transverse or perpendicular to that longitudinal orientation. Generally, the longitudinal and transverse orientations extend in a horizontal plane. The terms "lateral" is defined by reference to the horizontal axis including the longitudinal axis XX'.
- the term "vertically", "upwardly" and "downwardly" refers to the movement of the pod in the extraction device from its introduction between the two enclosing parts and its removal therefrom. The terms "upper" and "lower" refer to this vertical axis too.
- the terms "upstream" and "downstream" refer to the path of liquid through the extraction device from the upstream pod enclosing part to the downstream enclosing part.

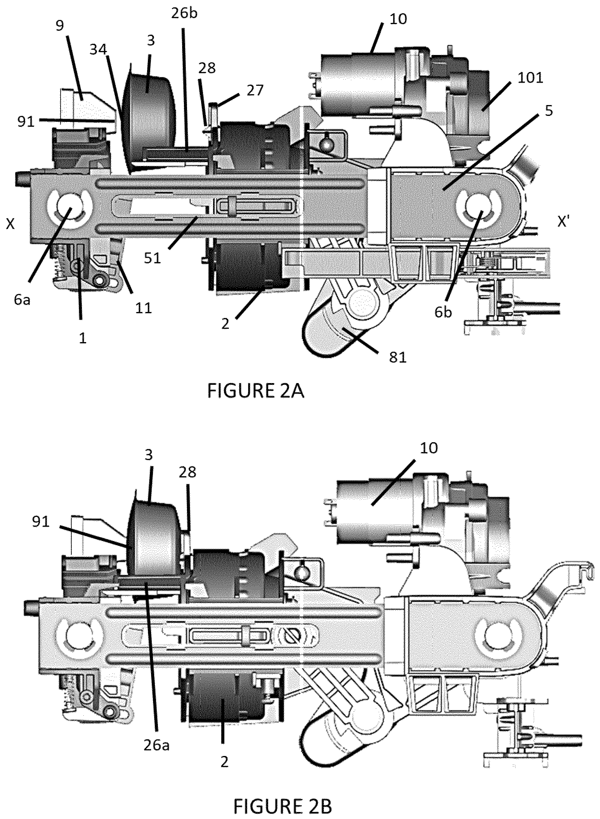

Generally, these terms are used to describe the relational positioning of features of the extraction device. These terms should be understood to refer to said device in its normal orientation when positioned in a beverage machine for the production of a beverage as shown in the figures 2A, 2B.

The above aspects of the invention may be combined in any suitable combination. Moreover, various features herein may be combined with one or more of the above aspects to provide combinations other than those specifically illustrated and described. Further objects and advantageous features of the invention will be apparent from the claims, from the detailed description, and annexed drawings.

### Brief description of the drawings

Specific embodiments of the invention are now described further, by way of example, with reference to the following drawings in which :
- Figures 1A and 1B are perspective and exploded views of a pod used in the system of the present invention according to a first embodiment,
- Figures 1C and 1D are views of pods used in the system of the present invention according to a second embodiment,
- Figure 2A and 2B are side views of the extraction device and the code reading system of a beverage preparation machine according to the invention in the pod holding and the pod reading position respectively,
- Figure 2C is a side view of the extraction device the beverage preparation machine according to the invention in the pod extraction position,
- Figure 3 is a perspective view of the upstream pod enclosing part isolated from the extraction device of Figure 2C,
- Figure 4 is a perspective view of the downstream enclosing part isolated from the extraction device of Figure 2A,
- Figure 5A correspond to Figure 2A in which the insertion section is represented,
- Figure 5B is a vertical section view of the downstream part of Figure 5A,
- Figure 5C is a top section view of the device of Figure 5A.

### Detailed description of exemplary embodiments

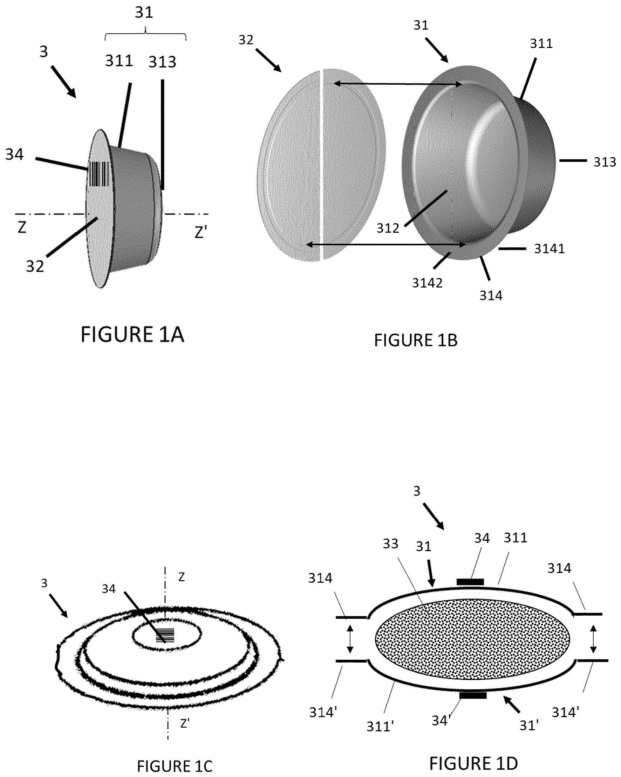

**Figures 1A and 1B** illustrate a pod 3 that can be used in the illustrated system.

The pod 3 comprises a pod body 31 with one side wall 311 that extends axially from a bottom wall 313 towards a top. The side wall 311 extends towards a top opening 312. At the top opening 312, the body comprises a circumferential annular flange 314 that extends radially outward from the side wall 311 along the circumference of the opening 312.

The flange comprises an upper surface 3142 facing the top and a lower surface 3141.

Generally, any transversal cross section of the body is circular from the bottom to the top and the flange is circular too.

The body delimits a chamber for containing a beverage ingredient.

This beverage ingredient is preferably an ingredient able to be extracted like roast and ground coffee. Preferably, this roast and ground coffee is compacted inside the pod itself as described in WO 2020/089403.

In a less preferred manner, the beverage ingredient can be tea leaves or a water soluble powder ingredient such as : instant coffee powder, milk powder, cream powder, instant tea powder, cocoa powder, soup powder, fruit powder or mixture of said powders or even a soluble liquid ingredient or a beverage concentrate such as a syrup or milk concentrate. The powders can be agglomerated or sintered.

The capsule comprises a lid 32 that is fixed, sealed or attached to at least a part of the upper surface 3142 of the circumferential flange and accordingly covers and closes the top opening 312.

A machine-readable code 34 can be arranged on the lid. This code can provide different types of information such as :
- the nature of the beverage ingredient,
- the size of the pod,
- authorised pod,
- the extraction recipe to applied to the pod : temperature of the fluid, volume of the fluid, flow of the fluid, ...

The bottom wall 313 is adapted to be pierced so that liquid can be injected in the pod through the pierced openings.

The lid 32 is adapted to be opened by relative engagement with a piercing arrangement under the effect of the liquid pressure increase inside the pod during injection of liquid.

The pod shape is symmetric relatively to the central axial axis ZZ' extending from the bottom wall to the lid and the pod shape is asymmetrical relatively to the plane of the lid and the flange.

The material of the pod and the sealing of the lid and the pod body are configured to provide air tightness and to protect the beverage ingredient from atmospheric air.

The material of the pod is usually flexible and deformable. In particular, this material is sufficiently flexible to be deformed under the effect of a difference of pressure between the atmosphere inside the pod and the atmosphere outside the pod. Such a deformation can appear when the altitude at the place of manufacturing of the pod is noticeably different from the altitude at the place of use of the pod.

With the illustrated pods of Figure 1A, when the place of use of the pods is higher than the place of manufacturing, then the lid appears inflated rather than flat. This deformation can impact the operation of reading the code 34.

Preferably the pods 3 are essentially made of a biodegradable or compostable material, preferably a home compostable material since extracted coffee cakes can easily be made composted at home.

Preferably, the material of the pod comprises a paper layer. This paper layer is formable, i.e. a sheet of paper can be given a three-dimensional shape that is the form of the body of the above described pod. Contrary to common pods made of filter paper, this paper is thick and keep the three-dimensional shape provided during a shaping step of manufacturing of the pod. Preferably, the paper layer of the pod can have a grammage of at least 20 g/m², preferably at most 150 g/m². The paper of the body can present a higher grammage than the paper of the id ; the grammage of the paper of the body can be comprised between 80 and 150 g/m².

Both papers can present a grammage of about 100 g/m².

The material of the pod can comprise a layer of paper and some other materials to provide additional properties such as air barrier, stretchable or deformable properties. These additional properties can be provided with at least one plastic layer, for example as described in WO 2020/114995. Some additional layers of the body and of the lid can be different.

In fact, in order to shape the paper as a container for the beverage and to create a barrier to protect the beverage ingredient, the paper must be sufficiently thick. In addition, to create a barrier to atmosphere, in particular oxygen to which roast and ground coffee is particularly sensitive, the layer of paper is preferably coated with a compostable plastic film. Sealants layers are often necessary to attach the different layers and prevent delamination. For example, such a multilayer paper material can be the material described in WO 2020/114995 or in WO 2022/022899.

With such pod materials, the thickness of the multilayer paper material of the body can be about 200 µm and the thickness of the multilayer paper material of the lid can be about 140 µm which means that the thickness of the flange is usually greater than 200 µm, even greater than 300 µm.

The extraction device of the present invention can be configured for using alternative containers presenting different shapes.

**Figures 1C** (perspective view) **and 1D** (exploded view) illustrate a second embodiment of the pods 3 that can be used in the extraction device of the invention.

The pod comprises the first and second enclosing walls 31, 31' that are identical : each of them comprise is a pod body 311, 311', said pod body defining half of the chamber and a circumferential annular body flange 314,314', and
. the circumferential annular body flanges of said pod bodies are attached together so as to delimit a chamber for containing the beverage ingredient 33.

With this second embodiment, the pod shape is symmetric relatively to the central axial axis ZZ' extending from the bottom wall to the lid and relatively to the plane of the attached flanges 314, 314'. Consequently, the pod can be indifferently oriented inside the extraction device with the first enclosing all 31 or the second enclosing wall 31' facing the upstream pod enclosing part. For this reason, it is preferable that a machine-readable code 34 is arranged on each enclosing parts 31, 31'

Below description relates to an extraction device that can be used with the above pods 3 according to the first embodiment of Figure 1A, 1B in an advantageous manner.

For the pods according to the second embodiment, below description applies wit the difference that the extraction device must be adapted to receive such pods. For example, the extraction device described in WO2007/135135, WO2004/071259, WO2013026844 or EP1767129 can be used.

**Figure 2A and 2B** are side views of the extraction device and the code reading system of a beverage preparation machine according to the invention in the pod holding and the pod reading position respectively
The extraction device comprises an upstream pod enclosing part 2 and a downstream pod enclosing part 1 relatively translatable along a longitudinal axis XX'. Preferably, this axis XX' is essentially horizontal.

A pod can be introduced through an insertion section (Figures 6A-6C) positioned above the two enclosing parts 1, 2, from which it can fall by gravity inside a pod holder 11 between these two enclosing parts 1, 2. After extraction, the pod can fall by gravity again below these two enclosing parts 1, 2 when they move apart one from the other.

The machine comprises a code reader 9 to read a code 34 provided on one of the enclosed wall of the pod. This code reader

This code reader is positioned above the extraction device enabling the operation of reading the code before the pod is inserted between the downstream and upstream enclosing parts.

This code reader 9 is configured to read the code by placing its reading head 91 in contact with the code 43 of the pod as illustrated

The code reading system is arranged to read a code arranged on a wall of the pod.

The code reading system includes a code reader with an image capturing unit and a reading head housing the image capturing unit to capture a digital image of the code. The image capturing unit includes a lighting system and camera system. Examples of a suitable image capturing unit include a Sonix SN9S102; Snap Sensor S2 imager; an oversampled binary image sensor; other like system.

The electrical circuitry includes image processing circuitry (not illustrated) to identify the code in the digital image and extract preparation information. An example of the image processing circuitry is a Texas Instruments TMS320C5517 processor running a code processing program.

The two pod enclosing parts 1, 2 are hold between two lateral and longitudinal sheets 4 and between two transversal axis 6a, 6b. The upstream pod enclosing part 2 is movable in translation between these two sheets 5 and these two axis 6a, 6b in order to assess different relative and functional positions including the two positions illustrated in Figures 2A and 2B. In the illustrated embodiment, the lateral sides of the upstream pod enclosing part comprise sliding parts designed to engage in grooves 51 of the lateral sheets so as to form a slide together. The downstream enclosing part 1 is fixed and only the upstream pod enclosing part 2 is movable back and forth along the longitudinal axis XX'. The upstream pod enclosing part is moved by an actuator comprising a knee-joint mechanism 81 cooperating at one end with the upstream pod enclosing part 2 and at the other end with the transversal axis 6b. This knee-joint mechanism is actuated by a motor 10 through a gear mechanism 101.

The motor and the knee-joint mechanism enables the position of the position of the upstream enclosing part 2 at various positions relatively to the downstream enclosing part 1 between a fully opened position and a closed position. In particular, the upstream enclosing part 2 can be positioned :
- in the pod holding position of Figure 2A where a pod can be hold in front of the reading head but separated from it and without falling in the pod holder 11 between the two pod enclosing parts 1, 2 , and
- in the pod reading position of Figure 2B where the pod is hold in front of the reading head and in contact with it.

In the pod holding position of Figure 2A, the pod is prevented from falling between the two pod enclosing parts 1, 2 by pod holders 26a, 26b extending from the front part of the downstream enclosing part
The code reader is fixed and positioned above the downstream enclosing part 1.

Yet in other less preferred embodiments, the code reader can be made movable to the pod.

The code reading system comprises a device 28 to push the pod 3 to the reading head 91 for a reading operation of the code 34 when the pod contacts the reading head.
movable upstream enclosing part 2 comprises

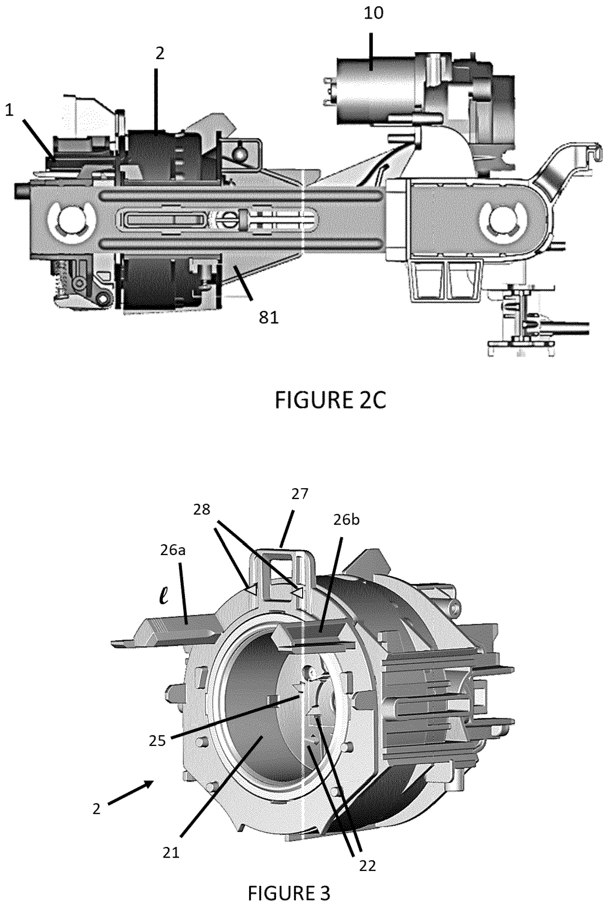

As illustrated in **Figure 3**, The upstream enclosing part 2 comprises two longitudinal protrusions 26a, 26b extending at the downstream face of the upstream pod enclosing part. These protrusions are pod triggers configured :
- to receive and hold the pod above the pod enclosing parts when the upstream pod enclosing part 2 is positioned in the pod holding. In this position, the pod is positioned inside the machine but can still be removed by the user before it is introduced between the two pod enclosing parts.
   and
- to release the pod from its holding position to the pod holder 11 when the upstream pod enclosing part 2 is moved to the fully opened position.

The design of these protrusions (in particular their longitudinal lengths ℓ) and their position at the downstream side of the upstream enclosing part can be set by taking into account the dimension of the pods and the length of the movement of the upstream enclosing part.

Preferably, the upstream enclosing part 2 comprises a pusher 27 designed and positioned to optimise the contact of the pod 3 with the reading head 91 when the pod is moved from the pod holding position to the reading position illustrated in Figure 2B. As illustrated, this pusher 28 can be a vertically oriented element extending from the top of the upstream enclosing part and sized to drive the movement of the pod when the upstream enclosing part 2 moves downstream.

The machine comprises a pre-piercing arrangement 28 in the form of two spikes rising from the surface of the pusher to the downstream direction. As a result, when the pod is moved from the holding position to the reading position, the pusher drives the pod to the reading head and at the reading position, the spikes pierce the wall of the pod. As a result, if the pod happened to be inflated, this piercing deflates the pod and guarantees an optimal contact of the reading head with the pod and an optimal reading of the code 34.

In a less preferred embodiment, the pre-piercing arrangement 28 can be on the side of the code reader 9 and the downstream positioned wall of the pod can be pierced when the pod is moved to the code reader.

Further to the reding operation, if the code is efficiently read, the beverage extraction can happen by :
- moving the upstream pod enclosing part 2 to a fully opened position where the pod support 26a, 26b does not support the pod any longer and the pod fall in the pod holder 11 between both enclosing parts, and then
- moving the upstream pod enclosing part 2 to a fully closed position as illustrated in **Figure 2C** where the two parts form an extraction chamber configured to enclose a pod and where the beverage extraction can happen.

**Figure 3** is an isolated perspective view of the downstream pod enclosing part 1 of Figures 2A and 2B. The downstream part 1 defines a plate perpendicular (that is transverse) to the longitudinal axis XX'. This plate comprises a central downstream plane piercing arrangement 12 for opening the lid 32 of the pod when the extracting liquid is introduced inside the pod and inflates the lid. Opening happens by relative engagement of spikes with the lid under the effect of the rise in pressure of the injected liquid in the pod body chamber. This downstream plane piercing arrangement can comprise a plate comprising opening elements 121 such as spikes, that can present the shape of cones or pyramids, optionally truncated at their ends, on its surface turned to the lid. In addition, the plate comprises traversing holes to evacuate the beverage dispensed from the opened lid to a tube or nozzle collecting and dispensing beverage to a drinking cup.

The downstream part 1 comprises a pod holder that is attached to the peripheral area. While being attached, the pod holder can be moved between two positions. In Figure 3, the pod holder is in the first position for receiving and holding the lid of the pod in front of the downstream plane piercing arrangement.

The pod holder 11 comprises a pair of arms 11a, 11b that retain and position the pod when this pair is in the first receiving position such as illustrated in Figure 3. In this position of the pod holder, these arms retain vertically the pod, that is they stop the vertical fall of the pod falling from the insertion position.

The pair of retaining elements 11a, 11b are movable from the receiving position to a second retracted position at the lateral sides of the downstream plane piercing when the upstream pod enclosing part is translated longitudinally from the fully opened position to the closed position. Preferably, each of the arms 11a, 11b of the pod holder can be locked in the retracted position during the extraction of the pod and during the ejection of the pod so as to prevent any malfunction during ejection.

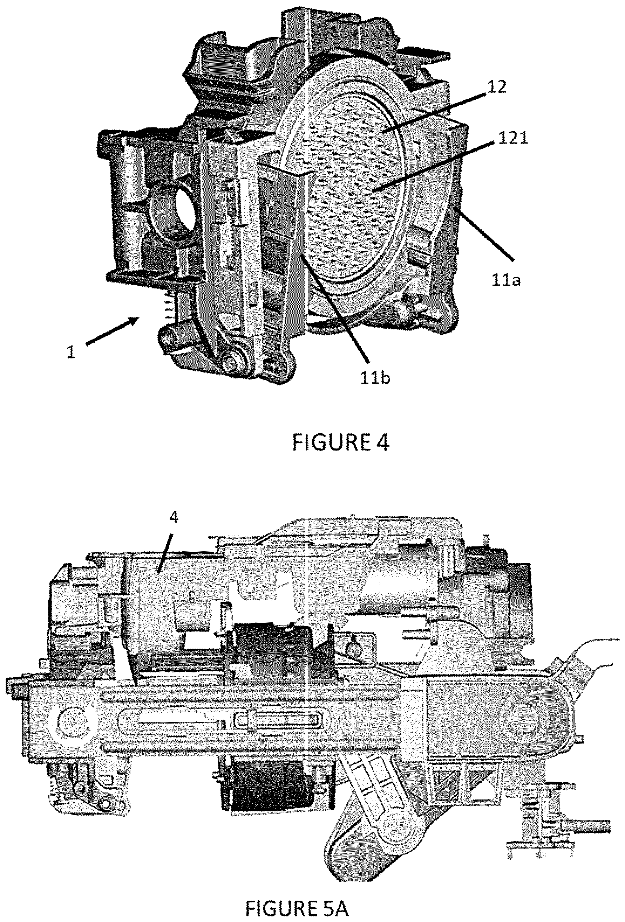

**Figure 4** is an isolated view of the upstream pod enclosing part 2 of the extraction device of Figures 2B. The upstream part defines an empty cage or cavity 21 for enclosing the pod body. This cage is defined by a side wall 11 extending between an opened front end 214 and a back end 213 along a cage longitudinal axis. This side wall is configured to enclose the side wall of the pod and generally presents a conformal shape to the pod body side wall. In the illustrated embodiment, the side wall presents a circular section.

The side wall is fixedly attached in an external carrier or chassis 23. This carrier is translatable between the open position and the closed position by means of the slide construction between its lateral sliding parts 231 with the corresponding sheet grooves 41 as described above. The carrier 23 and the side wall are made movable by an actuator as described below.

The cage 21 is defined too by its end wall 22 that is transverse to the longitudinal axis of the cage.

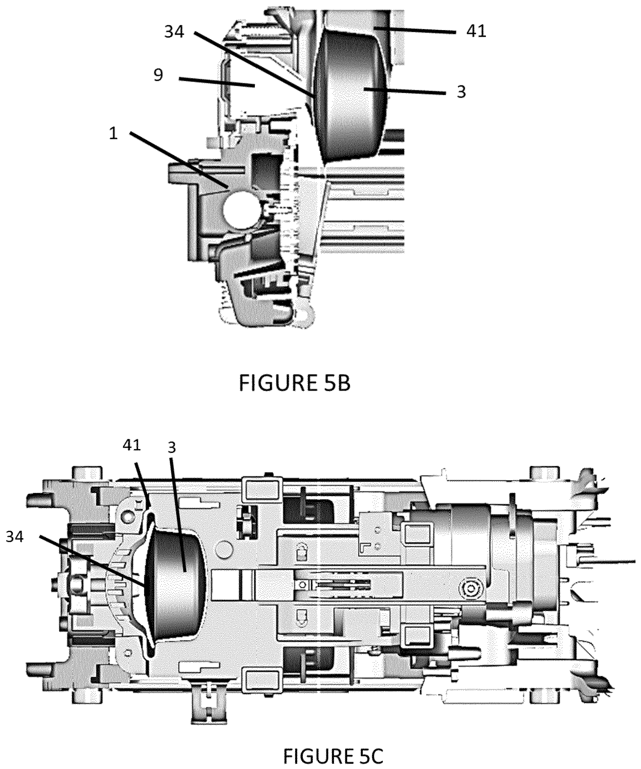

**Figures 5A-5C** illustrates the insertion section 4 of the machine that was not represented in Figures 2A. This insertion section comprises walls 41 defining a chute for insertion of the pod 3 by the user by gravity. Preferably the walls are designed to urge the user to position the pod with its lid 32 bearing the code facing the code reader 9 and the downstream piercing arrangement 1.

Depending on the shape of the pod 3, the walls 41 can also defined to keep the pod correctly oriented in front the of the code reader. In the particular illustrated embodiment, the pod is asymmetric and can hardly be maintained with its lid vertically oriented without being retained by the walls 41 of the insertion section.

Although the invention has been described with reference to the above illustrated embodiments, it will be appreciated that the invention as claimed is not limited in any way by these illustrated embodiments.

Variations and modifications may be made without departing from the scope of the invention as defined in the claims.

As used in this specification, the words "comprises", "comprising", and similar words, are not to be interpreted in an exclusive or exhaustive sense. In other words, they are intended to mean "including, but not limited to".

**List of references in the drawings :**

| | | | |
|---|---|---|---|
| downstream enclosing part | | | 1 |
| pod holder | | | 11 |
| | arms | | 11a, 11b |
| downstream plate piercing arrangement | | | 12 |
| spikes | | | 121 |
| upstream enclosing part | | | 2 |
| | cage | | 21 |
| | upstream piercing arrangement | | 22 |
| | liquid injector | | 25 |
| | pod support | | 26a, 26b |
| | pusher | | 27 |
| | pre-piercer | | 28 |
| pod | | | 3 |
| body | | | 31, 31' |
| | side wall | | 311, 311' |
| | top opening | | 312 |
| | bottom wall | | 313 |
| | flange | | 314, 314' |
| | lower surface | | 3141 |
| | upper surface | | 3142 |
| lid | | | 32 |
| ingredient | | | 33 |
| code | | | 34, 34' |
| insertion section | | | 4 |
| | wall | | 41 |
| lateral sheet | | | 5 |
| | | groove | 51 |
| axis | | | 6a, 6b |
| code reader | | | 9 |
| | | reading head | 91 |
| motor | | | 10 |
| gear mechanism | | | 101 |

## Claims

1. System comprising a beverage preparation machine and a pod containing a beverage ingredient,
wherein the pod (3) comprises a first and a second enclosing walls (31, 31', 32), said first and second enclosing walls defining a chamber for enclosing the beverage ingredient (33), and wherein a machine-readable code (34) storing preparation information is arranged on the surface of at least one of the enclosing walls,
wherein the beverage preparation machine comprises :
- an extraction device for extracting a beverage from the pod, and
- a code reading system to read the code of the pod, and
- electrical circuitry to control the extraction device based on the preparation information read from the code,
wherein the code reading system includes a code reader (9) and a positioning mechanism to move the pod and the code reader relative to each other :
. from a holding position, in which the pod is separated from a reading head (91) of the code reader,
. to a reading position, in which the code of the pod is in contact with the reading head,
**characterized in that** the beverage preparation machine comprises a pre-piercing arrangement (28) configured to pierce the pod before the code of the pod is read in the reading position.

2. System according to Claim 1, wherein the pre-piercing arrangement (28) is configured to pierce the wall opposed to the wall to be contacted by the reading head.

3. System according to Claim 1 or 2, wherein the beverage preparation machine comprises a pre-piercing arrangement (28) configured to pierce the pod when the positioning mechanism moves the pod and/or the code reader relative to each other from the holding position to the reading position.

4. System according to any one of the preceding claims, wherein the positioning mechanism comprises a pushing device (27) configured to push the pod from the holding position to the reading position, and wherein the pushing device bears the pre-piercing arrangement (28).

5. System according to any one of the preceding claims, wherein the beverage preparation machine comprises :
- an extraction device for extracting a beverage from the pod, and said extraction device comprising upstream and downstream pod enclosing parts (1, 2), wherein at least one of said pod enclosing parts is movable to the other between :
. an open position for inserting the pod in the extraction device and removing the pod from the extraction device and
. a closed position for forming an extraction chamber enclosing the pod during extraction, and
wherein the code reader is positioned above the upstream and downstream pod enclosing parts.

6. System according to the precedent claim, wherein the beverage preparation machine comprises a means (26a, 26b) to block vertically temporary the pod (3) in the holding position above the upstream and downstream pod enclosing parts (1, 2), and
wherein the blocking means is actuated by a movement of the upstream enclosing part or the downstream pod enclosing part.

7. System according to the precedent claim, wherein said vertically blocking means is a pod support (26a, 26b) attached to the upstream or the downstream pod enclosing part (1, 2), said pod support being designed and positioned relatively to upstream or downstream enclosing parts :
- to receive and hold the pod above the pod enclosing parts when the pod enclosing parts are positioned in a pod holding position,
- to release the pod when the upstream pod enclosing part are positioned in the open position.

8. System according to any one of Claims 5 to 7, wherein :
- the positioning mechanism comprises a pushing device (27), and
- the pushing device bears the pre-piercing arrangement (28), and
- the pushing device is attached to one of the movable pod enclosing part (1, 2).

9. System according to any one of the precedent claims, wherein the pod (3) is airtight and at least a part of the enclosing walls of the pod is made of a deformable material, said material being deformable under a difference of external atmospheric pressure and the machine-readable code (34) storing preparation information is arranged on the surface of said part of the enclosing walls of the pod made of the deformable material.

10. System according to the precedent claim, wherein said soft deformable material is a multilayer paper material, said multilayer paper material comprising at least one layer of paper assembled with at least one layer of plastic, preferably a compostable plastic layer.

11. System according to any one of the precedent claims, wherein the pod contains a compacted beverage ingredient, preferably compacted roast and ground coffee.

12. Beverage preparation machine for preparing a beverage from a pod, wherein said beverage preparation machine comprises :
- an extraction device for extracting a beverage from the pod, and
- a code reading system to read the code of the pod, and
- electrical circuitry to control the extraction device based on the preparation information read from the code,
wherein the code reading system includes a code reader and a positioning mechanism to move the pod and the code reader relative to each other :
. from a holding position, in which the pod is separated from a reading head of the code reader,
. to a reading position, in which the code of the container is in contact with the reading head, wherein the beverage preparation machine comprises a pre-piercing arrangement configured to pierce the pod before the code of the pod is read in the reading position.

13. A method of reading a code of a pod containing a beverage ingredient for preparing a beverage and/or foodstuff, the method comprising :
- moving the pod (3) relative a code reader (9) from a holding position in which the pod is separated from the code reader to a reading position in which the code of the pod is in contact with the reading head (91) of the code reader, and
- reading the code,
wherein, before the code is read, the pod is pre-pierced.

14. Use of a pod (3) comprising a first and a second enclosing walls (31, 31', 32), said first and second enclosing walls defining a chamber for enclosing the beverage ingredient (33), and wherein a machine-readable code (34) storing preparation information is arranged on the surface of at least one of the enclosing walls in the system of any one of Claims 1 to 11 or in the beverage preparation machine of Claim 12.

## Patentansprüche

1. System, umfassend eine Getränkezubereitungsmaschine und einen Pod, der eine Getränkeinhaltsstoff enthält,
wobei der Pod (3) eine erste und eine zweite Umschließungswand (31, 31', 32) umfasst, wobei die erste und die zweite Umschließungswand eine Kammer zum Umschließen des Getränkeinhaltsstoffs (33) definieren, und wobei ein maschinenlesbarer Code (34), der Zubereitungsinformationen speichert, auf der Oberfläche mindestens einer der Umschließungswände angeordnet ist,
wobei die Getränkezubereitungsmaschine umfasst:
- eine Extraktionsvorrichtung zum Extrahieren eines Getränks aus dem Pod, und
- ein Codelesesystem, um den Code des Pods zu lesen, und
- elektrische Schaltlogik, um die Extraktionsvorrichtung basierend auf den Zubereitungsinformationen, die aus dem Code gelesen werden, zu steuern,
wobei das Codelesesystem einen Codeleser (9) und einen Positionierungsmechanismus einschließt, um den Pod und den Codeleser relativ zueinander zu bewegen:
. aus einer Halteposition, in der der Pod von einem Lesekopf (91) des Codelesers getrennt ist,
. in eine Leseposition, in der der Code des Pods mit dem Lesekopf in Kontakt steht,
**dadurch gekennzeichnet, dass** die Getränkezubereitungsmaschine eine Vordurchstechanordnung (28), die konfiguriert ist, um den Pod zu durchstechen, bevor der Code des Pods in der Leseposition gelesen wird, umfasst.

2. System nach Anspruch 1, wobei die Vordurchstechanordnung (28) konfiguriert ist, um die Wand gegenüber der Wand, die durch den Lesekopf kontaktiert werden soll, zu durchstechen.

3. System nach Anspruch 1 oder 2, wobei die Getränkezubereitungsmaschine eine Vordurchstechanordnung (28), die konfiguriert ist, um den Pod zu durchstechen, wenn der Positionierungsmechanismus den Pod und/oder den Codeleser relativ zueinander von der Halteposition in die Leseposition bewegt, umfasst.

4. System nach einem der vorstehenden Ansprüche, wobei der Positionierungsmechanismus eine Schubvorrichtung (27), die konfiguriert ist, um den Pod von der Halteposition in die Leseposition zu schieben, umfasst, und wobei die Schubvorrichtung die Vordurchstechanordnung (28) trägt.

5. Verfahren nach einem der vorstehenden Ansprüche, wobei die Getränkezubereitungsmaschine umfasst:
- eine Extraktionsvorrichtung zum Extrahieren eines Getränks aus dem Pod, und die Extraktionsvorrichtung umfassend ein vorgeschaltetes und ein nachgeschaltetes Podumschließungsteil (1, 2), wobei mindestens eines der Podumschließungsteile zu dem anderen bewegbar ist zwischen:
. einer offenen Position zum Einsetzen des Pods in die Extraktionsvorrichtung und Entfernen des Pod aus der Extraktionsvorrichtung und
. einer geschlossenen Position zum Ausbilden einer Extraktionskammer, die den Pod während einer Extraktion umschließt, und
wobei der Codeleser oberhalb des vorgeschalteten und des nachgeschalteten Podumschließungsteils positioniert ist.

6. System nach dem vorstehenden Anspruch, wobei die Getränkezubereitungsmaschine ein Mittel (26a, 26b), um den Pod (3) in der Halteposition oberhalb des vorgeschalteten und des nachgeschalteten Podumschließungsteils (1, 2) zeitweilig vertikal zu blockieren, umfasst, und
wobei das Blockiermittel durch eine Bewegung des vorgeschalteten Umschließungsteils oder des nachgeschalteten Podumschließungsteils betätigt wird.

7. System nach dem vorstehenden Anspruch, wobei das vertikal Blockiermittel eine Podstütze (26a, 26b) ist, die an dem vorgeschalteten oder dem nachgeschalteten Podumschließungsteil (1, 2) befestigt ist, wobei die Podstütze relativ zu dem vorgeschalteten oder dem nachgeschalteten Umschließungsteil ausgelegt und positioniert ist:
- um den Pod oberhalb der Podumschließungsteile aufzunehmen und zu halten, wenn die Podumschließungsteile in einer Podhalteposition positioniert sind,
- um den Pod freizugeben, wenn das vorgeschaltete Podumschließungsteil in der offenen Position positioniert ist.

8. System nach einem der Ansprüche 5 bis 7, wobei:
- der Positionierungsmechanismus eine Schubvorrichtung (27) umfasst, und
- die Schubvorrichtung die Vordurchstechanordnung (28) trägt, und
- die Schubvorrichtung an einem der bewegbaren Podumschließungsteile (1, 2) befestigt ist.

9. System nach einem der vorstehenden Ansprüche, wobei der Pod (3) luftdicht ist und mindestens ein Teil der Umschließungswände des Pods aus einem verformbaren Material hergestellt ist, wobei das Material unter einer Differenz von äußerem Atmosphärendruck verformbar ist und der maschinenlesbare Code (34), der Zubereitungsinformationen speichert, auf der Oberfläche des Teils der Umschließungswände des Pods, der aus dem verformbaren Material hergestellt ist, angeordnet ist.

10. System nach dem vorstehenden Anspruch, wobei das weiche verformbare Material ein mehrschichtiges Papiermaterial ist, das mehrschichtige Papiermaterial umfassend mindestens eine Papierschicht, die mit mindestens einer Kunststoffschicht, vorzugsweise einer kompostierbaren Kunststoffschicht, zusammengefügt ist.

11. System nach einem der vorstehenden Ansprüche, wobei der Pod einen kompaktierten Getränkeinhaltsstoff, vorzugsweise kompaktierten gerösteten und gemahlenen Kaffee, enthält.

12. Getränkezubereitungsmaschine zum Zubereiten eines Getränks aus einem Pod, wobei die Getränkezubereitungsmaschine umfasst:
- eine Extraktionsvorrichtung zum Extrahieren eines Getränks aus dem Pod, und
- ein Codelesesystem, um den Code des Pods zu lesen, und
- elektrische Schaltlogik, um die Extraktionsvorrichtung basierend auf den Zubereitungsinformationen, die aus dem Code gelesen werden, zu steuern,
wobei das Codelesesystem einen Codeleser und einen Positionierungsmechanismus einschließt, um den Pod und den Codeleser relativ zueinander zu bewegen:
. aus einer Halteposition, in der der Pod von einem Lesekopf des Codelesers getrennt ist,
. in eine Leseposition, in der der Code des Behälters mit dem Lesekopf in Kontakt steht,
wobei die Getränkezubereitungsmaschine eine Vordurchstechanordnung, die konfiguriert ist, um den Pod zu durchstechen, bevor der Code des Pods in der Leseposition gelesen wird, umfasst.

13. Verfahren zum Lesen eines Codes eines Pods, der einen Getränkeinhaltsstoff zum Zubereiten eines Getränks und/oder Lebensmittels enthält, das Verfahren umfassend:
- Bewegen des Pods (3) relativ zu einem Codeleser (9) von einer Halteposition, in der der Pod von dem Codeleser getrennt ist, in eine Leseposition, in der der Code des Pods mit dem Lesekopf (91) des Codelesers in Kontakt steht, und
- Lesen des Codes,
wobei, bevor der Code gelesen wird, der Pod vordurchgestochen wird.

14. Verwendung eines Pods (3), umfassend eine erste und eine zweite Umschließungswand (31, 31', 32), wobei die erste und die zweite Umschließungswand eine Kammer zum Umschließen des Getränkeinhaltsstoffs (33) definieren, und wobei ein maschinenlesbarer Code (34), der Zubereitungsinformationen speichert, auf der Oberfläche mindestens einer der Umschließungswände in dem System nach einem der Ansprüche 1 bis 11 oder der Getränkezubereitungsmaschine nach Anspruch 12 angeordnet ist.

## Revendications

1. Système comprenant une machine de préparation de boisson et une capsule contenant un ingrédient de boisson,
dans lequel la capsule (3) comprend une première et une seconde paroi d'enceinte (31, 31', 32), lesdites première et seconde parois d'enceinte définissant une chambre pour enfermer l'ingrédient de boisson (33), et dans lequel un code lisible par machine (34) stockant des informations de préparation est agencé sur la surface d'au moins l'une des parois d'enceinte,
dans lequel la machine de préparation de boisson comprend :
- un dispositif d'extraction pour extraire une boisson de la capsule, et
- un système de lecture de code pour lire le code de la capsule, et
- un ensemble de circuits électriques pour commander le dispositif d'extraction sur la base des informations de préparation lues à partir du code,
dans lequel le système de lecture de code comporte un lecteur de code (9) et un mécanisme de positionnement pour déplacer la capsule et le lecteur de code l'un par rapport à l'autre :
. d'une position de maintien, dans laquelle la capsule est séparée d'une tête de lecture (91) du lecteur de code,
. vers une position de lecture, dans laquelle le code de la capsule est en contact avec la tête de lecture,
**caractérisé en ce que** la machine de préparation de boisson comprend un agencement de pré-perçage (28) conçu pour percer la capsule avant que le code de la capsule ne soit lu dans la position de lecture.

2. Système selon la revendication 1, dans lequel l'agencement de pré-perçage (28) est conçu pour percer la paroi opposée à la paroi devant être mise en contact avec la tête de lecture.

3. Système selon la revendication 1 ou 2, dans lequel la machine de préparation de boisson comprend un agencement de pré-perçage (28) conçu pour percer la capsule lorsque le mécanisme de positionnement déplace la capsule et/ou le lecteur de code l'un par rapport à l'autre de la position de maintien vers la position de lecture.

4. Système selon l'une quelconque des revendications précédentes, dans lequel le mécanisme de positionnement comprend un dispositif de poussée (27) conçu pour pousser la capsule de la position de maintien vers la position de lecture, et dans lequel le dispositif de poussée porte l'agencement de pré-perçage (28).

5. Procédé selon l'une quelconque des revendications précédentes, dans lequel la machine de préparation de boisson comprend :
- un dispositif d'extraction pour extraire une boisson de la capsule, et ledit dispositif d'extraction comprenant des parties d'enceinte de capsule amont et aval (1, 2), dans lequel au moins l'une desdites parties d'enceinte de capsule est mobile vers l'autre entre :
. une position ouverte pour insérer la capsule dans le dispositif d'extraction et retirer la capsule du dispositif d'extraction et
. une position fermée pour former une chambre d'extraction enfermant la capsule pendant l'extraction, et
dans lequel le lecteur de code est positionné au-dessus des parties d'enceinte de capsule amont et aval.

6. Système selon la revendication précédente, dans lequel la machine de préparation de boisson comprend un moyen (26a, 26b) pour bloquer verticalement de manière temporaire la capsule (3) dans la position de maintien au-dessus des parties d'enceinte de capsule amont et aval (1, 2), et
dans lequel le moyen de blocage est actionné par un mouvement de la partie d'enceinte amont ou de la partie d'enceinte de capsule aval.

7. Système selon la revendication précédente, dans lequel ledit moyen de blocage vertical est un support de capsule (26a, 26b) fixé à la partie d'enceinte de capsule amont ou aval (1, 2), ledit support de capsule étant conçu et positionné par rapport aux parties d'enceinte amont ou aval :
- pour recevoir et maintenir la capsule au-dessus des parties d'enceinte de capsule lorsque les parties d'enceinte de capsule sont positionnées dans une position de maintien de capsule,
- pour libérer la capsule lorsque la partie d'enceinte de capsule amont est positionnée dans la position ouverte.

8. Système selon l'une quelconque des revendications 5 à 7, dans lequel :
- le mécanisme de positionnement comprend un dispositif de poussée (27), et
- le dispositif de poussée porte l'agencement de pré-perçage (28), et
- le dispositif de poussée est fixé à l'une des parties d'enceinte de capsule mobiles (1, 2).

9. Système selon l'une quelconque des revendications précédentes, dans lequel la capsule (3) est étanche à l'air et au moins une partie des parois d'enceinte de la capsule est constituée d'un matériau déformable, ledit matériau étant déformable sous l'effet d'une différence de pression atmosphérique externe et le code lisible par machine (34) stockant des informations de préparation est agencé sur la surface de ladite partie des parois d'enceinte de la capsule constituée du matériau déformable.

10. Système selon la revendication précédente, dans lequel ledit matériau déformable souple est un matériau papier multicouche, ledit matériau papier multicouche comprenant au moins une couche de papier assemblée avec au moins une couche de plastique, de préférence une couche de plastique compostable.

11. Système selon l'une quelconque des revendications précédentes, dans lequel la capsule contient un ingrédient de boisson compacté, de préférence du café torréfié et moulu compacté.

12. Machine de préparation de boisson pour préparer une boisson à partir d'une capsule, dans laquelle ladite machine de préparation de boisson comprend :
- un dispositif d'extraction pour extraire une boisson de la capsule, et
- un système de lecture de code pour lire le code de la capsule, et
- un ensemble de circuits électriques pour commander le dispositif d'extraction sur la base des informations de préparation lues à partir du code,
dans laquelle le système de lecture de code comporte un lecteur de code et un mécanisme de positionnement pour déplacer la capsule et le lecteur de code l'un par rapport à l'autre :
. d'une position de maintien, dans laquelle la capsule est séparée d'une tête de lecture du lecteur de code,
. vers une position de lecture, dans laquelle le code du récipient est en contact avec la tête de lecture,
dans lequel la machine de préparation de boisson comprend un agencement de pré-perçage conçu pour percer la capsule avant que le code de la capsule ne soit lu dans la position de lecture.

13. Procédé de lecture d'un code d'une capsule contenant un ingrédient de boisson pour préparer une boisson et/ou un produit alimentaire, le procédé comprenant :
- le déplacement de la capsule (3) par rapport à un lecteur de code (9) d'une position de maintien dans laquelle la capsule est séparée du lecteur de code vers une position de lecture dans laquelle le code de la capsule est en contact avec la tête de lecture (91) du lecteur de code, et
- la lecture du code,
dans lequel, avant la lecture du code, la capsule est pré-percée.

14. Utilisation d'une capsule (3) comprenant une première et une seconde paroi d'enceinte (31, 31', 32), lesdites première et seconde parois d'enceinte définissant une chambre pour enfermer l'ingrédient de boisson (33), et dans laquelle un code lisible par machine (34) stockant des informations de préparation est agencé sur la surface d'au moins l'une des parois d'enceinte dans le système selon l'une quelconque des revendications 1 à 11 ou dans la machine de préparation de boisson selon la revendication 12.
